(19) Europäisches Patentamt
European Patent Office
Office européen des brevets

(11) EP 4 597 098 A1

(12) EUROPEAN PATENT APPLICATION

(43) Date of publication:
06.08.2025 Bulletin 2025/32

(51) International Patent Classification (IPC):
*G01N 30/86* (2006.01)    *G01N 30/88* (2006.01)
*G01N 30/72* (2006.01)

(21) Application number: 24155086.2

(22) Date of filing: 31.01.2024

(52) Cooperative Patent Classification (CPC):
**G01N 30/8662; G01N 30/8631; G01N 30/8693;**
G01N 30/7233; G01N 2030/8813

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: BIOCRATES Life Sciences AG
6020 Innsbruck (AT)

(72) Inventors:
• BURATI, Martin Herzog Sigmund
6176 Völs (AT)

• LIMONCIEL, Alice
6020 Innsbruck (AT)
• PELISEK, Daniel Pelisek
6091 Götzens (AT)
• TUAN, Hai Pham
6020 Innsbruck (AT)
• TALMAZAN, Radu Alexandru
6020 Innsbruck (AT)

(74) Representative: Simandi, Claus
Simandi Patentanwälte
Kurfürstendamm 45
10719 Berlin (DE)

(54) **METHOD FOR PEAK PICKING IN LC/MS**

(57) The present invention relates to a new method for peak picking by using at least one AI algorithm wherein the presence of at least one compound corresponds to the regions in a Liquid Chromatography/Mass Spectrometry (LC/MS) chromatogram by detecting and identifying peaks with pre-processing steps for cleaning up the chromatogram in order to improve the results of the AI algorithm on complex samples.

Figure 4 All values outside the region of interest (window) in the artificial chromatogram are set to 0 intensity, resulting in a cleaner artificial chromatogram.

EP 4 597 098 A1

## Description

The present invention relates to a new method for peak picking by using at least one artificial intelligence (AI) algorithm, wherein the presence of at least one compound corresponds to the regions in a Liquid Chromatography/Mass Spectrometry (LC/MS) chromatogram by detecting and identifying peaks with pre-processing steps for cleaning up the chromatogram in order to improve the results of the AI algorithm on complex samples.

Metabolomics is a comprehensive quantitative measurement of low molecular weight compounds covering systematically the key metabolites, which represent the whole range of pathways of intermediary metabolism. In a systems biology approach, it provides a functional readout of changes determined by genetic blueprint, regulation, protein abundance and modification, and environmental influence. The capability to analyse large arrays of metabolites extracts biochemical information reflecting true functional end-points of overt biological events while other functional omics technologies such as transcriptomics and proteomics, though highly valuable, merely indicate the potential cause for phenotypic response. Therefore, they cannot necessarily predict drug effects, toxicological response or disease states at the phenotype level unless functional validation is added.

In general, phenotype is not necessarily predicted by genotype. The gap between genotype and phenotype is spanned by many biochemical reactions, each with individual dependencies to various influences, including drugs, nutrition and environmental factors. In this chain of biomolecules from the genes to phenotype, metabolites are the quantifiable molecules with the closest link to phenotype. Many phenotypic and genotypic states, such as a toxic response to a drug or disease prevalence are predicted by differences in the concentrations of functionally relevant metabolites within biological fluids and tissues.

Hereto, metabolomics refers to a method and an apparatus capable of identifying relevant information in biological samples providing a metabolite profile of a biological sample in a reliable way within a manageable time.

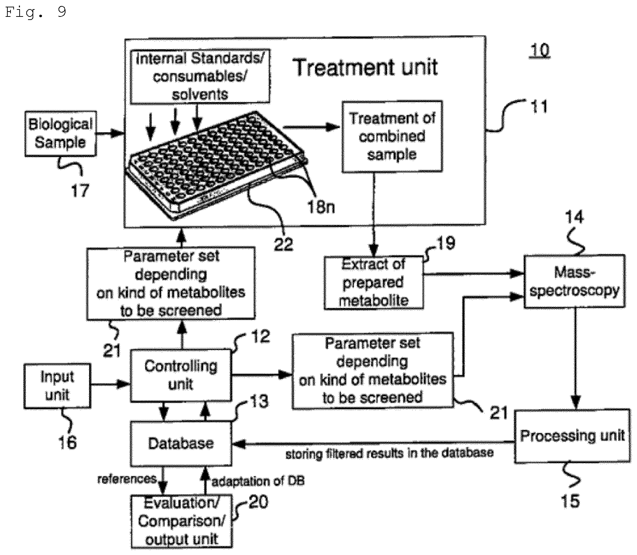

Metabolomics deals with an apparatus for analyzing a metabolite profile in a biological sample containing at least one metabolite. The apparatus or device includes (see Figure 9): an *Input unit* for inputting the kind of metabolites to be screened, a *controlling unit* for determining a parameter set for sample preparation and for mass spectrometry analysis depending on the Input of the kind of metabolites to be screened, a *treatment unit* for preparing the metabolites to be screened depending on the determined parameter set, a *mass spectrometer* for performing mass spectrometry analysis on prepared metabolites depending on the parameter set, a *database* for storing results of mass spectrometry analysis and/or parameter sets used for metabolite preparation and for mass spectrometry analysis, an *evaluation unit* for evaluating and comparison of the results derived by mass spectrometry using reference results stored in the database (e.g. reference chromatogram, QC references, etc.), and for output of the analysis of the metabolite profile included in the biological sample under consideration.

This is based on the idea that by providing an apparatus for preparing a biological sample and for analysing metabolites in a biological sample, reproducible conditions for analysing are kept over a wide range of analyses. Moreover, by providing an automated process for preparation of the biological sample and for mass spectrometry analysis, the comprehensive amount of data to be processed could be handled. By adapting the evaluation of the results of mass spectrometry utilising reference results stored in the database, the analyses results derived from drug and/or metabolite profiles could be improved by use of the knowledge collected during previous analyses. Further, quantification by utilizing appropriate internal standards (ISTD) is used for quantifying the drugs and/or metabolites in a biological sample. By use of automated pre-analytical procedures, the amount of results is reduced. A plurality of standard operational procedures (SOP) is used for treating and handling a plurality of biological samples in a standardized way, depending on the metabolites to be screened.

Liquid Chromatography/Mass Spectrometry (LC/MS) is a widely used analytical technique in metabolomics due to its sensitivity, specificity, and the ability to handle a wide range of compounds. Metabolomics using LC/MS typically involves a systematic workflow. Biological samples, such as blood, urine, tissues, or cells, are first extracted to obtain the metabolites. The extracted sample is then separated using liquid chromatography, which separates the metabolites based on their chemical properties. LC is employed for separating complex mixtures of metabolites. Different LC techniques, such as reversed-phase or hydrophilic interaction chromatography, can be used to enhance the separation of metabolites based on factors like hydrophobicity, polarity, or charge. LC/MS data is processed to identify metabolites by comparing experimental data with databases of known mass spectra. Isotopic patterns, fragmentation patterns, and retention times are often used for metabolite identification. Confirmation of identities can be achieved using standards or additional techniques like tandem mass spectrometry (MS/MS).

The abundance of metabolites is quantified based on the intensity of *peaks* in the mass spectra or chromatograms. Data analysis involves statistical and bioinformatics methods to identify significant changes in metabolite levels, pathways affected, and potential biomarkers.

Peaks appear in the data (graphs) obtained from mass spectrometers. Their height and area indicate the amount of a compound present. Moreover, the intensity of a peak is a valuable information.

Hence, a 2D-chromatogram is represented as follows:

X-axis (Horizontal Axis): Represents time or the volume of the mobile phase (elution time).

Y-axis (Vertical Axis): Represents the signal intensity recorded by the detector, namely mass spectrometry. The intensity of the signal from the analyte is compared to the noise level in the chromatogram. A higher signal-to-noise ratio indicates a more reliable and accurate measurement. It is crucial for both qualitative and quantitative analyses.

Peaks: Each peak in the chromatogram represents a separated compound of a sample. The height of the peak corresponds to the abundance or concentration of the compound, while the width of the peak indicates the distribution of the interaction strength of the compound with the chromatographic system/column. The height of a peak in a chromatogram corresponds to the maximum intensity of the signal produced by a particular compound. Peak height is determined by concentration of a compound. Peak height is often used for semi-quantitative or qualitative assessments of the concentration of a compound. The area under a peak is a more accurate measure of the quantity of a compound than peak height alone. It takes into account both the intensity and the duration of the signal. The area is calculated by integrating the signal over the entire width of the peak. Larger peak areas generally indicate higher concentrations of the analyte. The process of measuring the area under a peak is known as integration. This involves summing up the signal intensities at each point across the entire peak. The integration process provides a quantitative measure of the amount of a particular compound in the sample.

The term "peak centre" essentially means the retention time at which the peak of a particular compound is located in the chromatogram. It represents the time at which the concentration of that compound is at its highest. Therefore, each peak centre has a minimum to the left and to the right.

Retention Time: The time it takes for a particular compound to travel from the point of injection to the detector. Retention time is a characteristic property used for identification and quantification of compounds.

Baseline: The baseline is the horizontal line on the chromatogram indicating the signal level in the absence of any sample components. Peaks rise above the said baseline or so called zero line.

The term "zero sample" means a blank or a control sample that does not contain the analyte of interest. These samples are used to establish a baseline (supra) and determine any background signals or interferences that might be present in the chromatographic system.

In general, for the purpose of the present invention, said metabolomics analysis method comprises the generation of intensity data or peaks for the measurement of metabolites or compounds by mass spectrometry (MS), in particular MS-technologies selected from the group of Matrix Assisted Laser Desorption/Ionisation (MALDI), Electro Spray Ionization (ESI), Atmospheric Pressure Chemical Ionization (APCI), Selected Reaction Monitoring (SRM) or Multiple Reaction Monitoring (MRM), Triple Quadrupole LC/MS (QQQ), Orbitrap LC/MS, coupled to methods of separation, i.e. Liquid Chromatography (LC-MS). According to the invention HPLC (High-Performance Liquid Chromatography) is also envisaged.

Peak picking in the context of Liquid Chromatography/Mass Spectrometry (LC/MS) refers to the process of identifying and extracting relevant information from the raw data generated during an LC/MS experiment providing a sample chromatogram. Overall, peak picking is a crucial step in the data analysis workflow of LC/MS, enabling researchers to identify and quantify the components of a sample, providing valuable information for fields such as chemistry, biochemistry, pharmaceuticals, and environmental science, in particular metabolomics.

Peak picking involves several key steps:

**Data Acquisition:** LC/MS instruments generate raw data, consisting of mass spectra and chromatograms, as the sample is analysed. The mass spectra provide information about the mass-to-charge ratio of ions, while the chromatogram shows the intensity of these ions over time.

**Signal Processing:** Raw data often contains noise and other artifacts. Signal processing techniques are applied to enhance the quality of the data, including baseline correction and noise reduction.

**Peak Detection:** The process of identifying peaks involves recognizing the elevated regions in the chromatogram that correspond to individual compounds. This is typically carried out using computational algorithms that can distinguish true peaks from background noise.

**Peak Deconvolution:** In complex samples, multiple compounds may elute at the same time, resulting in overlapping peaks. Peak deconvolution is the process of separating overlapping peaks to identify individual compounds more accurately.

**Compound Identification:** Once peaks are detected, the next step is to identify the compounds responsible for those peaks. This is often achieved by comparing the mass spectra and retention times with reference databases or using additional techniques like tandem mass spectrometry (MS/MS).

**Quantification:** After identification, the abundance or concentration of each compound is determined. This is typically carried out by measuring the area under the peak in the chromatogram, a process known as peak integration.

However, it is well known that samples, particularly biological or complex samples, i.e. with a multitude of compounds and contaminations or impurities, affect the performance of LC/MS and the related sample chromatogram (hereinafter: "sample chromatogram").

It is also known that AI algorithms are used to identify compounds, but the performance is lower, particularly for biological samples, complex samples where contaminations or impurities may occur, low concentrations and matrix effects that make it difficult for AI algorithms or human experts to identify the correct peak.

It is therefore an object of the present invention to provide a new method for peak picking that allows a safe automated workflow with an ideal application of AI algorithms.

The problem is solved by means of at least one of the technical teachings as set out in the claims.

In LC/MS, the use of quality control (QC) samples is essential to ensure that the chromatography has been performed correctly. QC samples have a known chemical composition of known compounds and provide high quality signals that can be used for normalisation across multiple measurements and for identifying the correct peaks in 'unknown' samples, i.e. samples of unknown chemical composition and compounds.

The inventors have now found that an improvement can be achieved when inventive pre-processing steps lead to better results through the generation of a so-called "artificial chromatogram", enabling a safe automated process with a consistent workflow.

Hence, the present invention refers to a method for peak picking by using at least one AI algorithm wherein the presence of at least one compound corresponds to the regions in a Liquid Chromatography/Mass Spectrometry (LC/MS) chromatogram by detecting and identifying peaks, characterized in that a first original sample chromatogram is provided and the following steps are carried out:

a.) generating a second artificial chromatogram having at least one peak by subtracting the median of the zero samples from the first original chromatogram,

b1.) selecting at least one peak from a.) which correlates with the retention time of a known compound and

b2.) selecting a rectangular window (region of interest) to the left and right of the highest maximum of the peak, the rectangular window being horizontally to the left and right independently of each other a maximum of less or more 30 seconds of the retention time of b1.), the window running perpendicular to the baseline,

c.) using a scaling algorithm based on a comparison between the highest intensities of the selected peaks from b1.) and a reference chromatogram to modify the window according to b2.) and setting all intensities outside the modified window to zero,

d.) using a smoothing algorithm and removing small noises still present in the peaks from c.)

e.) wherein the peak from d.) is picked up by at least one AI algorithm, the corresponding retention time and the first minima left and right of the peak centre are defining a modified window from c.), which is transferred to the first sample chromatogram and replaces the correlating peak,

f.) wherein the minima left and right of the peak centre of the peak e.) are determined by a minimum finder algorithm defining a peak area, and

g.) wherein the integration of the peak area according to f.) is performed.

The inventive approach is based on the novel aspect of combining the use of QCs, which provide reference values for the retention time of the compounds of interest, followed by a complex data cleaning process. Existing prior art approaches analyse all samples (QC samples and unknown samples) independently, whereas the inventors create a refined artificial chromatogram that is used to detect compounds in the unknown samples. This has the advantage of significantly improving the accuracy of peak detection without drastically increasing the computational time required for the AI algorithm.

The result of these pre-processing steps is a significant increase in data analysis throughput while maintaining accuracy, making peak picking and compound quantification safer.

In a further preferred embodiment of the invention the retention time is normalized to compensate fluctuations in the settings (pressure, gradient, mobile phase, etc.).

In a preferred embodiment of the invention, the known compounds of step b1.) refer to QCs which serve as a reference for the retention time at which a compound is expected to elute. The artificial chromatogram is cleaned by using the retention time (window) of the QC samples. All values determined outside the selected retention time window are set to values near zero or zero and thus hidden from the peak picking process. Hereto, "zero" means that the value is set to zero or near to zero.

This ensures that the selected peak is within the retention time range in which it is expected to elute. A further preference is to select the retention time range (window) in any range to the left and right of the desired retention time.

Step b2.): If the sample concentration is in the same range as the QC (known) samples, the peaks obtained should be similar in height, width, and shape. However, when the concentration is low, the peaks tend to become narrower, lose their Gaussian shape and are surrounded by more and more noise. This can reduce the accuracy of an AI peak picking algorithm, as it becomes more difficult to find the correct peak.

Step c.): By comparing the height of the highest point of the peak with a reference chromatogram of a QC sample or known compound, a scaling algorithm is used to reduce the retention time (window) region in which the peak is expected to be located. This further removes noise from the artificial chromatogram and increases the chances of selecting the correct peak.

Step d.): The smoothing algorithm is based on a moving average approach. It is a standard algorithm used for smoothing of chromatograms and is likely present in software used for data processing of chromatograms (e. g. Analyst)

In preferred embodiment the AI algorithm according to step e.) refers to a U-net based algorithm, trained on LC/MS data of known samples. Similar AI algorithms are present in literature: PeakOnly

(https://pubs.acs.org/doi/10.1021/acs.ana lchem.9b04811) - CNN(U-net based), PeakBot (https://academic.oup.com/bioinformatics/article/ 38/13/3422/65 90644) - CNN network, (https://pubs.acs.org/doi/10.1021/acs.ana lchem.9b02983) - CNN.

Moreover, Machine Learning Algorithms are useful as AI algorithm, where various machine learning algorithms can be trained to recognize patterns associated with peaks in LC/MS data. Some commonly used machine learning algorithms include:
Support Vector Machines (SVM): Effective in binary classification tasks and can be trained to distinguish between peak and non-peak regions.

Random Forests: Ensemble learning method that can handle complex data sets and is capable of peak detection with high accuracy.

Neural Networks: Deep learning models, such as convolutional neural networks (CNNs) or recurrent neural networks (RNNs), can learn intricate patterns in LC/MS data for peak identification.

Step f.): The minimum finder algorithm is known to the skilled person and such approaches are commonly used in peak identification approaches provided in software used for data processing of chromatograms.

Examples and Figures

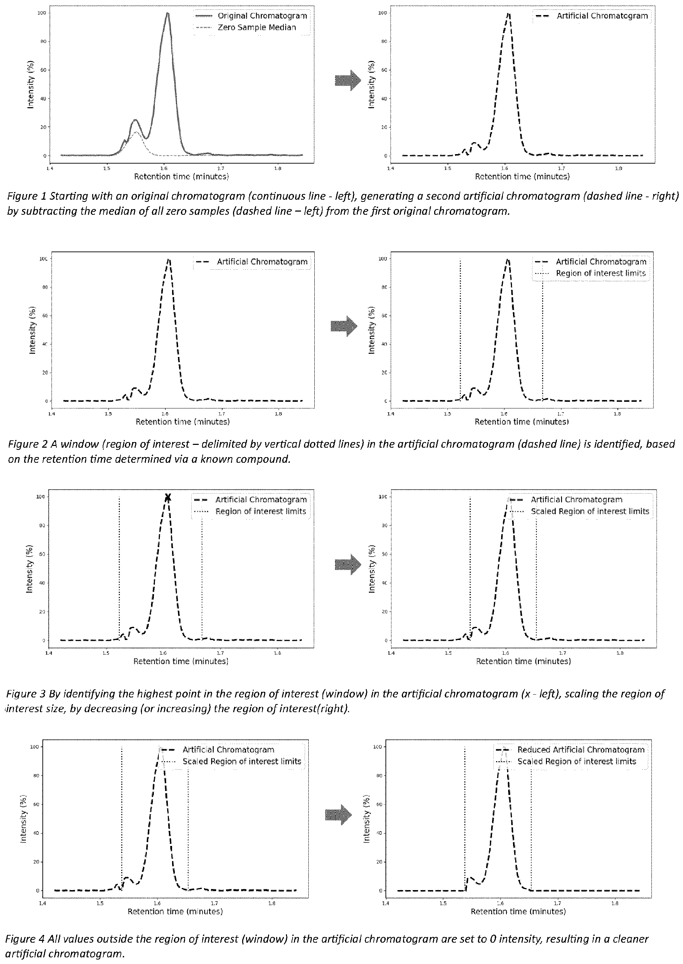

The invention is further illustrated by the following Figures 1 to 8.

In order to identify the correct peak by peak picking, a multi-step protocol is implemented according to the invention. First, an artificial chromatogram is generated by subtracting the median of the zero samples from the original chromatogram, as shown in Figure 1 (step a.)).

This artificial chromatogram is subjected to several cleaning steps in order to increase the detection accuracy for the AI-based detection.

First, the region of interest is identified (see Figure 2, step b.). An estimate of the region of interest can be obtained by determining the retention time of known (reference) compounds. Once the initial region of interest has been defined, it can be refined by scaling it according to the maximum intensity detected within the region of interest window (step c.). These values can be compared to a reference and scaled appropriately, using a non-linear scaling formula, such as:

$$SF = A * \log_2 \left( \frac{Detected\ intensity}{Reference\ intensity} \right)$$

wherein SF belongs to the scaling factor, A is an empirically determined correction factor, the detected intensity represents the maximum peak height within the region of interest and the reference intensity represents the maximum intensity of the reference chromatographic peak.

Using this calculated scaling value, the region of interest is either reduced or extended in size, as shown in Figure 3, remaining centred on the retention time position of the known (reference) compound.

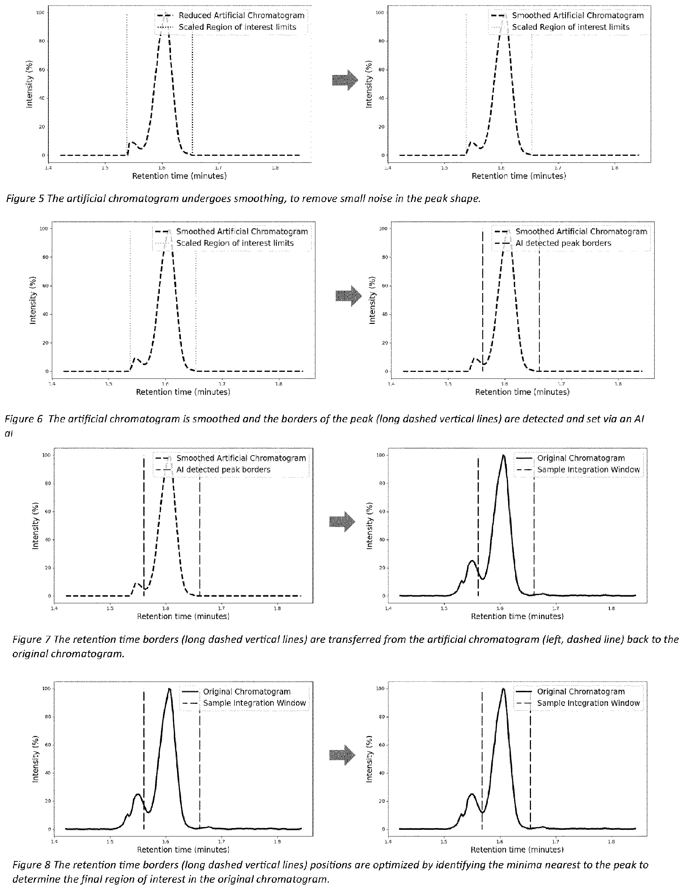

Once the final region of interest was assigned, the artificial chromatogram undergoes two final cleaning steps. The intensity values outside of the region of interest are set to 0 (Figure 4, step c.)), eliminating interfering peaks outside the region of interest. The resulting artificial chromatogram is then smoothed (Figure 5, step d.)) and prepared for interpretation by the AI algorithm.

The AI algorithm detects the borders of the peak in the artificial chromatogram (Figure 6, step e.)), which are then transferred back to the original chromatogram (Figure 7). Finally, a minimum finder algorithm can be used to locate the minima closest to the peak (Figure 8, step f.)).

This ensures that the peak borders are correctly adapted to the original chromatogram, as the lowest points next to the peak in the original chromatogram are not necessarily the lowest points in the artificial chromatogram, due to the zero-sample correction that took place in the first processing step.

The steps a.) to f.) may be part of an automated workflow. The workflow can be implemented in an apparatus or device as depicted in Figure 9 and described above.

Hence, the method according to the invention allows the identification, semi-quantification, or quantification of one or more compounds.

**Claims**

1. A method for peak picking by using at least one AI algorithm wherein the presence of at least one compound corresponds to the regions in a Liquid Chromatography/Mass Spectrometry (LC/MS) chromatogram by detecting and identifying peaks, **characterized in that** a first original sample chromatogram is provided and the following steps are carried out:

a.) generating a second artificial chromatogram having at least one peak by subtracting the median of the zero samples from the first original chromatogram,

b1.) selecting at least one peak from a.) which correlates with the retention time of a known compound and

b2.) selecting a rectangular window (region of interest) to the left and right of the highest maximum of the peak, the rectangular window being horizontally to the left and right independently of each other a maximum of less or more 30 seconds of the retention time of b1.), the window running perpendicular to the baseline,

c.) using a scaling algorithm based on a comparison between the highest intensities of the selected peaks from b1.) and a reference chromatogram to modify the window according to b2.) and setting all intensities outside the modified window to zero,

d.) using a smoothing algorithm and removing small noises still present in the peaks from c.)

e.) wherein the peak from d.) is picked up by the at least one AI algorithm, the corresponding retention time and the first minima left and right of the peak centre are defining a modified window from c.), which is transferred to the first sample chromatogram and replaces the correlating peak,

f.) wherein the minima left and right of the peak centre of the peak e.) are determined by a minimum finder algorithm defining a peak area, and

g.) wherein the integration of the peak area according to f.) is performed.

2. A method for peak picking according to claim 1 wherein the Liquid Chromatography/Mass Spectrometry (LC/MS) contains mass spectrometry selected from the group of Matrix Assisted Laser Desorption/Ionisation (MALDI), Electro Spray Ionization (ESI), Atmospheric Pressure Chemical Ionization (APCI), Selected Reaction Monitoring (SRM) or Multiple Reaction Monitoring (MRM), Triple Quadrupole LC/MS (QQQ) or Orbitrap LC/MS.

3. A method for peak picking according to claim 1 or claim 2 wherein the Liquid Chromatography/Mass Spectrometry (LC/MS) contains High-Performance Liquid Chromatography.

4. A method for peak picking according to any one of claims 1 to 3, wherein at least one compound corresponds to the regions in the chromatogram of a Liquid Chromatography/Mass Spectrometry (LC/MS) is identified by an AI algorithm.

5. A method for peak picking according to any one of claims 1 to 4, wherein the method presents an automated workflow.

6. A method for peak picking according to any one of claims 1 to 5 for the identification, semi-quantification, or quantification of one or more compounds.

Figure 1 Starting with an original chromatogram (continuous line - left), generating a second artificial chromatogram (dashed line - right) by subtracting the median of all zero samples (dashed line – left) from the first original chromatogram.

Figure 2 A window (region of interest – delimited by vertical dotted lines) in the artificial chromatogram (dashed line) is identified, based on the retention time determined via a known compound.

Figure 3 By identifying the highest point in the region of interest (window) in the artificial chromatogram (x - left), scaling the region of interest size, by decreasing (or increasing) the region of interest(right).

Figure 4 All values outside the region of interest (window) in the artificial chromatogram are set to 0 intensity, resulting in a cleaner artificial chromatogram.

*Figure 5 The artificial chromatogram undergoes smoothing, to remove small noise in the peak shape.*

*Figure 6  The artificial chromatogram is smoothed and the borders of the peak (long dashed vertical lines) are detected and set via an AI al*

*Figure 7 The retention time borders (long dashed vertical lines) are transferred from the artificial chromatogram (left, dashed line) back to the original chromatogram.*

*Figure 8 The retention time borders (long dashed vertical lines) positions are optimized by identifying the minima nearest to the peak to determine the final region of interest in the original chromatogram.*

Fig. 9

Europäisches
Patentamt

European
Patent Office

Office européen
des brevets

# EUROPEAN SEARCH REPORT

**Application Number**

EP 24 15 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHAO-JUNG CHEN ET AL: "Recent advances in LC-MS-based metabolomics for clinical biomarker discovery", MASS SPECTROMETRY REVIEWS, JOHN WILEY AND SONS, NEW YORK, NY, US, vol. 42, no. 6, 29 May 2022 (2022-05-29), pages 2349-2378, XP072513997, ISSN: 0277-7037, DOI: 10.1002/MAS.21785 * figure 1 * * page 2371 - page 2372, left-hand column, line 11 * | 1-6 | INV. G01N30/86 G01N30/88 ADD. G01N30/72 |
| A | DEBUS BRUNO ET AL: "Deep learning in analytical chemistry", TRAC TRENDS IN ANALYTICAL CHEMISTRY, ELSEVIER, AMSTERDAM, NL, vol. 145, 21 October 2021 (2021-10-21), XP086880569, ISSN: 0165-9936, DOI: 10.1016/J.TRAC.2021.116459 [retrieved on 2021-10-21] * figure 1 * * page 3, right-hand column, line 10 - page 7, left-hand column, line 54 * | 1-6 | |
| A | US 9 040 903 B2 (COON JOSHUA J [US]; WESTPHALL MICHAEL S [US] ET AL.) 26 May 2015 (2015-05-26) * column 3, lines 14-23 * | 1-6 | |

TECHNICAL FIELDS SEARCHED (IPC)

G01N

-/--

The present search report has been drawn up for all claims

| Place of search | Date of completion of the search | Examiner |
|---|---|---|
| Munich | 12 July 2024 | Marembert, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 15 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VINCENT DELPHINE ET AL: "Milk Bottom-Up Proteomics: Method Optimization", FRONTIERS IN GENETICS, vol. 6, no. 360, 11 January 2016 (2016-01-11), pages 1-24, XP055785676, DOI: 10.3389/fgene.2015.00360 * page 5, right-hand column, paragraph "Statistical Analyses" * | 1-6 | |
| A | GEORGIOS THEODORIDIS ET AL: "Mass spectrometry-based holistic analytical approaches for metabolite profiling in systems biology studies", MASS SPECTROMETRY REVIEWS, 1 January 2011 (2011-01-01), pages n/a-n/a, XP055169267, ISSN: 0277-7037, DOI: 10.1002/mas.20306 * page 888 * | 1-6 | |

TECHNICAL FIELDS
SEARCHED (IPC)

The present search report has been drawn up for all claims

| Place of search | Date of completion of the search | Examiner |
|---|---|---|
| Munich | 12 July 2024 | Marembert, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 5086

This annex lists the patent family members relating to the patent documents cited in  the above-mentioned European search report.
The members are as contained in the European Patent Office EDP file on
The European Patent Office is in no way liable for these particulars which are merely given for the purpose of information.

12-07-2024

| Patent document cited in search report | | Publication date | Patent family member(s) | Publication date |
|---|---|---|---|---|
| US 9040903 | B2 | 26-05-2015 | DE 102012102875 A1 | 29-11-2012 |
| | | | US 2012261568 A1 | 18-10-2012 |

For more details about this annex : see Official Journal of the European Patent Office, No. 12/82

EPO FORM P0459